# EUROPEAN PATENT SPECIFICATION

(11) **EP 2 217 389 B1**
(45) Date of publication and mention of the grant of the patent: **03.07.2013**
(21) Application number: 09745893.9
(22) Date of filing: 13.05.2009
(51) Int. Cl.: B07C 3/00, G06Q 50/32, G06Q 10/08, H04L 29/12, B07C 3/18

(54) **SYSTEM, METHOD, DEVICE AND MAIL SORTING MACHINE FOR ENABLING THE DELIVERY OF DISPATCHES IN A POSTAL OPERATOR'S MESSAGING NETWORK**
SYSTEM, VERFAHREN, VORRICHTUNG UND POSTSORTIERMASCHINE ZUR ERMÖGLICHUNG DER BEREITSTELLUNG VON VERSENDUNGEN IM BENACHRICHTIGUNGSNETZWERK EINES POSTBETREIBERS
SYSTÈME, PROCÉDÉ, DISPOSITIF ET MACHINE DE TRI DE COURRIER POUR PERMETTRE LA DISTRIBUTION D'ENVOIS DANS UN RÉSEAU DE MESSAGERIE D'OPÉRATEUR POSTAL

(30) Priority: 14.05.2008 FI 20085453
(43) Date of publication of application: 18.08.2010
(73) Proprietor: Itella Oyj, 00230 Helsinki (FI)
(72) Inventor: VIRTANEN, Seppo, FI-06650 Hamari (FI); PITKÄNEN, Pekka, FI-00550 Helsinki (FI)
(74) Representative: Berggren Oy Ab
(86) International application number: PCT/FI2009/050395
(87) International publication number: WO 2009/138568

(56) References cited:
- WO-A1-01/86568
- WO-A1-02/51051
- DE-A1- 10 032 776
- DE-A1- 10 032 776
- DE-A1-102006 036 115
- US-A1- 2003 055 869
- US-A1- 2005 187 654
- US-A1- 2005 259 658
- US-A1- 2005 259 658
- FALTSTROM P ET AL: "The E.164 to Uniform Resource Identifiers (URI) Dynamic Delegation Discovery System (DDDS) Application (ENUM)", IETF REQUEST FOR COMMENTS, XX, XX, 1 April 2004 (2004-04-01), pages 1-18, XP002300595,
- VIESTINTAVIRASTO: 'ENUM-tekninen kuvaus (Technical description of ENUM)', [Online] 06 October 2007, Retrieved from the Internet: <URL:http://web.archive.org/web/20071006052 231/http://www.ficora.fi/index/palvelut/pal velutaiheittain/enum/tekninenkuvas.html - http://www.ficora.fi/en/index/palvelut/palv elutaiheittain/enumltekninenkuvas.h (english translation of the above page; no publication date available)> [retrieved on 2009-09-11]
- MOCKAPETRIS ISI P: "DOMAIN NAMES - CONCEPTS and FACILITIES; rfc882.txt", 19831101, 1 November 1983 (1983-11-01), XP015006872, ISSN: 0000-0003

## Description

The invention relates to a method and system, as well as to a device and mail sorting machine for enabling the delivery of dispatches in a postal operator's messaging network. In addition, the invention relates to the incorporation of a postal operator's messaging network in electronic communication networks as a segment thereof.

Postal operators' messaging network is used for delivering a multitude of various dispatches, the most typical of which include letters and parcels, as well as other physical consignments. Postal operators may also offer a delivery service of electronic dispatches, wherein the written material is transmitted electronically to a postal operator, whereupon it shall be, for example, printed, enveloped and sent to the receiver in a physical version. Various electronic delivery services are also currently offered for example by mobile communication and Internet operators, wherein the dispatch to be delivered in electronic format can be transmitted for example by means of a mobile communicator and converted, prior to an ultimate delivery to the destination, for example into an electronic mail transmissible in an Internet operator's communication network or vice versa. It is also prior known to make conversions into fax transmissions or e.g. from fax transmission to e-mail.

In related art, US 2005/0259658 A1 discloses a cross-referencing server storing cross-references between different address designations for a person, entity or location, which cross-reference server may be employed to map one address assigned to a person to another address assigned to the same person. The addresses can include e.g. a mailing address, a telephone number, an email address or a URL associated with the person, as well as a virtual address assigned to the person.

DE 10032776 A1 discloses an approach that involves a data processor using information found on a storage medium to determine a geographical address on basis of an assigned universal mail address of a receiver mounted on the surface of a mail delivery material.

US 2003/0055869 A1 discloses a system and method for mass mailing, wherein data comprising mass mailing items is electronically distributed to a receiving center where it is sorted by region and then to a service center assigned to the region. Moreover, at the service center the data is further sorted by the line of route of distribution including addressee addresses. The data is printed in the receiving center or in a local distribution center, wherefrom it is delivered to the addressee.

However, the prior art solutions involve certain problems, such as, for example, maintaining the delivery address up to date or the unintelligibility and the misinterpretation possibilities of long street addresses, as well as updating the addresses and even responding to a change of address in the middle of delivering a dispatch. It is often the case that the address of a receiver, written on a dispatch by a sender of the dispatch in his/her personal hand, is so long and/or unintelligible that its interpretation in a machine-readable manner is next to impossible or at least susceptible to errors. Moreover, even if the receiver were to notify senders of a change of his/her address, the updating and upkeep of address registers is often perceived laborious and inconvenient, as a result of which the addresses of private senders in particular are often out of date. Keeping the addresses up to date is also hampered for example by changes of street names as well as by changes of postal operators' zip codes, for example as a result of municipal amalgamations. This necessitates quite extensive actions on the part of a postal operator for finding out a correct address in the event that the receiver's address information marked on a dispatch has become outdated.

Further problems, especially in electronic delivery services, are caused, among other things, by outdated e-mail addresses or a replaced e-mail operator, or even by failure to read a received e-mail message for some reason. The e-mail message may occasionally end up for example in a spam filter, thus never reaching its destination. Due to the changes of e-mail addresses or operators, the senders are compelled to upkeep and update the list of e-mail addresses on a regular basis, which naturally takes time and increases costs. It is also possible that the delivery of an electronic message to its destination fails simply because the electronic communication services do not work for some reason, such as, for example, because of jammed-up programs or viruses.

It is indeed an objective of the invention to create such a solution for enabling the delivery of dispatches in a postal operator's messaging network that the foregoing prior art drawbacks can be alleviated. Among the aspects that the invention pursues to resolve is how to enable the sender to avoid maintaining records regarding changes of delivery addresses. In addition, the invention pursues to speed up the distribution of dispatches and to reduce costs, as well as to discourage the futile back-and-forth delivery of dispatches.

These objectives of the invention are attained by providing, for enabling the delivery of a dispatch in a postal operator's messaging network, the address of a receiver in the form of a receiver-specifying virtual address. The virtual address is signaled to a first database carrier for returning, in response to the signaling, an operator's server address, which is relevant to the virtual address. This is followed by signaling said virtual address to said operator's server address for returning, in response to said signaling, a delivery address relevant to said virtual address on a second database carrier, whose records are accessible to said operator, converting the dispatch from a physical format to into an electronic format and sending said dispatch in the electronic format along with said virtual address to said operator's server address for delivery of the dispatch to the receiver in the operator's messaging network. Said dispatch is converted into a physical format and said delivery address is used for enabling the delivery of the dispatch in the physical format in said operator's messaging network.

The system according to the invention is characterized by what is presented in the independent claim directed to a system.

The method according to the invention is characterized by what is presented in the independent claim directed to a method.

The device according to the invention is characterized by what is presented in the independent claim directed to a device.

The computer software product according to the invention is characterized by what is presented in the independent claim of directed to a computer software product.

A few preferred embodiments of the invention are presented in the dependent claims.

According to one embodiment of the invention, for enabling the delivery of a dispatch in a postal operator's messaging network, the employed receiver-specifying virtual address is in the form of an ENUM telephone number. ENUM stands for a version of IETF consistent with RFC 3761, wherein an E. 164 number is converted into a domain name according to the Internet DNS system or a so-called ENUM identifier, and for a manner which enables, by the application of this domain name, addressing a plurality of messaging services, such as Internet services and e-mail, relevant to this particular E.164 number.

In the ENUM version, the order of individual digits of an E. 164 telephone number is reversed and other extra indicia are deleted. In the domain name, each individual digit is separated from the others with a dot. For its completion, a root code (e164.arpa.) is added as a postfix. In keeping with the definition, a Finnish phone number +358 9 6966 634 is expressed, after the ENUM conversion, as a domain name 4.3.6.6.6.9.6.9.8.5.3.e164.arpa. The postfix ".arpa" is a postfix used in the public ENUM system. Other postfixes can be used in closed ENUM systems.

The thus obtained domain name can be used for making an ENUM query for clarifying URI's (Universal Resource Identifier) matching the domain name. If an ENUM identifier is found in the ENUM system, the querying party shall be supplied with return information about Tier-2 name servers defined for this particular ENUM identifier. On the other hand, a query addressed to these Tier-2 name servers returns one or more Naming Authority Pointer (NAPTR) records, which are used for representing the URl's. In response, the querying party is supplied with a return list of the name-matching URI's (e.g. SIP URI or tel URI or email URI) arranged according to priorities set up by a receiver of the message.

According to one embodiment of the invention, the ENUM telephone number, used as a dispatch-receiver specifying virtual address, is converted into an ENUM identifier. The conversion can be executed by a data terminal, which is in the process of transmitting the dispatch, or alternatively for example by a teleoperator's network element upon receiving a dispatch from the data terminal. According to one embodiment, the conversion can also be implemented by a converter device of the first database carrier.

The first database carrier comprises a receiver-specifying virtual address, as well as an operator's server address relevant to said virtual address. The first database carrier may comprise a plurality of sub-database carriers, such as for example a root server. One way of implementing the first database carrier is to provide a Tier-0 server for the root server, a Tier-1 server for storing the virtual address as well as for pointing at least one NAPTR record on a Tier-2 server, wherein the at least one NAPTR record comprises a postal operator's server address relevant to the virtual address. It should be noted that the Tier servers mentioned in this example constitute one way of implementing the first database carrier, but that the invention is not limited to such servers alone.

According to an embodiment of the invention, the receiver-specifying virtual address is signaled to the first database carrier, which comprises an NAPTR record. In turn, the NAPTR record contains an operator's server address, which is relevant to the virtual address and which is returned, in response to signaling, for example to a data terminal or for example to a teleoperator's network element, which signals the virtual address to said first database carrier. The operator can be for example a mobile communication or Internet operator, or optionally a postal operator in direct service of the receiver.

This is followed by signaling the virtual address to said operator's server address. The operator receives said virtual address and retrieves from a second database carrier, the records of which are accessible to the operator, a delivery address relevant to said virtual address. According to one embodiment of the invention, said delivery address is returned, in response to said signaling, for example to a data terminal which conducted the signaling, the latter receiving the delivery address and using it for enabling the delivery of a dispatch in a postal operator's messaging network. Alternatively, a dispatch can also be delivered, along with a virtual address, to an operator's server address, whereby the second database carrier returns a delivery address relevant to the virtual address to the operator who, in turn, uses it for enabling the dispatch to be delivered in a postal operator's messaging network. According to one embodiment of the invention, the second database carrier is separate from said first database carrier.

According to one embodiment of the invention, the operator can be for example a mobile communication or Internet operator who selects from the second database carrier a delivery address, which matches said virtual address and is used for enabling the delivery of a dispatch in a postal operator's messaging network. According to one embodiment, this means that the delivery address is the physical address of a receiver, such as a street address, which the mobile communication or Internet operator attaches to a dispatch and then sends the dispatch to a postal operator to be placed in the latter's messaging network. In the case of a mobile communication or Internet operator, the operator most commonly forwards a dispatch to a postal operator who then delivers it over its own messaging network to a receiver. In the case of a postal operator, the dispatch can be placed directly in this particular postal operator's messaging network or optionally forwarded to some other postal operator for a delivery.

According to one embodiment of the invention, said first database carrier comprises a preference list of at least two different addresses or operator's server addresses, whereby a valid address or an operator's server address can be selected according to preferences defined, for example, by the receiver and/or the sender of a dispatch. According to one embodiment of the invention, said second database carrier comprises a preference list of at least two different delivery addresses, whereby a valid delivery address can be selected according to preferences defined, for example, by the receiver and/or the sender of a dispatch.

According to one example, the dispatch to be delivered is originally in electronic format. Alternatively, the original dispatch to be delivered can also be a physical consignment convertible into an electronic format, such as, for example, an optically readable letter. In this case, said dispatch is preferably converted into an electronic format prior to delivering the consignment.

According to one embodiment of the invention, said dispatch is converted into a physical format, such as into a letter or a card, prior to an ultimate delivery of the dispatch to the receiver in a postal operator's messaging network. Most preferably, the conversion from electronic format to physical format is performed as close to a receiver as possible, such as, for example, in the output center of a receiver's postal operator, whereby the dispatch can be sent quickly and conveniently to its destination by using, for the most part, electronic messaging systems. This also enables verifying that the ultimate physical delivery address is indeed the most recent one. Thereafter, the ultimate delivery of a dispatch converted into physical format proceeds the same way as the delivery of traditional physical consignments in a postal operator's messaging network. The conversion can also be effected by another operator, such as, for example, a mobile communication or Internet operator, before the dispatch is forwarded to a postal operator.

In addition, according to one embodiment of the invention, a dispatch can also be provided with a sender-specifying virtual identifier, whereby the dispatch sender can be informed of a progress of the dispatch by using the virtual sender identifier. The virtual identifier can be for example the sender's ENUM telephone number, whereby the sender can be informed for example by a text message, but also by other similar means, as described for example in this document. According to one embodiment of the invention, the mode of communication preferred by a sender can be found out by signaling the sender's virtual identifier to a first database server, which returns a contacting address preferred by the sender, such as directly, for example, a mobile communicator number or an e-mail address for the sender. The sender can be informed, for example when the dispatch has been passed over to the responsibility of another operator or when the dispatch has been delivered to its destination or the receiver has picked up the dispatch. According to one embodiment, the sender can also be informed in the event that a dispatch cannot be delivered to a receiver, for example if the receiver is not located at a marked delivery address or his/her address details (for example the applied virtual address) are incorrect for some reason. In this case, the sender may submit, as a response, for example a new virtual address for the receiver or optionally a virtual address for another receiver.

According to yet another embodiment of the invention, the receiver can be informed beforehand of an incoming dispatch and progress stages of the dispatch by using the receiver's virtual address employed on the dispatch. The information service can be implemented for example by sending a text message to a mobile communicator's phone number relevant to the virtual address or alternatively by any other means in case the receiver is preferential to some other mode of communication, such as e-mail, for example. According to one embodiment of the invention, the mode preferred by a receiver, and the address for sending information about an incoming dispatch, are obtained from the first and/or second database carrier upon signaling said virtual address of the receiver to said first (and possibly also to the second) database carrier.

The invention offers considerable benefits over prior art solutions. Among other things, the invention matches together electronic messaging services and postal services as a segment of the existing electronic global messaging network, providing a possibility for receivers to define preferences for messaging services used thereby and their personal availability. According to an example, the receiver can channel and convert messages from electronic messaging networks into letters, for example when the e-mail address of a sender has become outdated or the e-mail operator has been replaced or the e-mail for some reason slips by without being read. In addition, according to another example receivers will be able to channel or convert e.g. letters into electronic messages, for example in the event of a disruption in postal delivery service, such as into faxes, e-mails or text messages, among others. In addition, according to a further example postal dispatches can be delivered to the destination even if the sender only had electronic contact details for the receiver, such as for example a telephone number, or even if a postal address for the receiver in possession of the sender were for one reason or another outdated or incorrect.

The examples provided herein enable reaching a receiver automatically for example by a letter, even when electronic messaging services are not in operation, or by electronic messaging services when the receiver prefers these to a letter. The invention also enables senders to reach their telephone or e-mail customers by postal service without expensive and time-consuming collection and upkeep of postal addresses, even if all their communication were otherwise conducted electronically. In the latter event, the postal addresses can be maintained just in case that the electronic contact details become outdated or the lines of communication do not function. Furthermore, by means of the invention, the diversion (forwarding) of postal dispatches to a receiver's correct address is an up-to-date, swift and cost-effective process and, if necessary, the forwarding can be conducted as early as in the process of sending a dispatch instead of waiting until the dispatch has arrived in the distribution network of a receiver's postal operator and has even been carried to the receiver-serving post office, in which the new address is known.

In addition, the examples provided herein enable text messages, e-mails, faxes and other suchlike electronic messages to be channeled and converted according to the preferences of a receiver and/or a sender, for example from Internet and a mobile communication network for a postal network, and the letter dispatches to be channeled and converted from a postal network for example into text messages, e-mails and faxes for e.g. Internet and mobile communication networks, as well as the deliveries of a postal operator to be channeled globally in the postal operators' network.

Preferred embodiments of the invention will be described a little more precisely in the subsequent segment with reference to the accompanying figures, in which
- fig. 1A: shows one example of a method for the registration of an ENUM number in a postal operator's address information system and in the ENUM system, according to one embodiment of the invention,
- fig. 1B: shows one exemplary method for enabling the delivery of a dispatch in a postal operator's messaging network, according to one embodiment of the invention,
- fig. 2A: shows one exemplary system, along with its database configuration, for enabling the delivery of a dispatch in a postal operator's messaging network, according to one embodiment of the invention,
- fig. 2B: shows a second exemplary system, along with its database configuration, for enabling the delivery of a dispatch in a postal operator's messaging network,
- fig. 3: shows one example for delivering an electronic message in the form of a physical letter in a postal operator's messaging network,
- fig. 4: shows one example for communicating a message by a multichannel mode in a postal operator's messaging network,
- fig. 5: shows one exemplary mail sorting machine for delivering a dispatch in a postal operator's messaging network,
- fig. 6: shows one device for enabling the delivery of a dispatch in a postal operator's messaging network, according to one embodiment of the invention,
- fig. 7: shows one exemplary computer software product for enabling the delivery of a dispatch in a postal operator's messaging network, according to one embodiment of the invention.

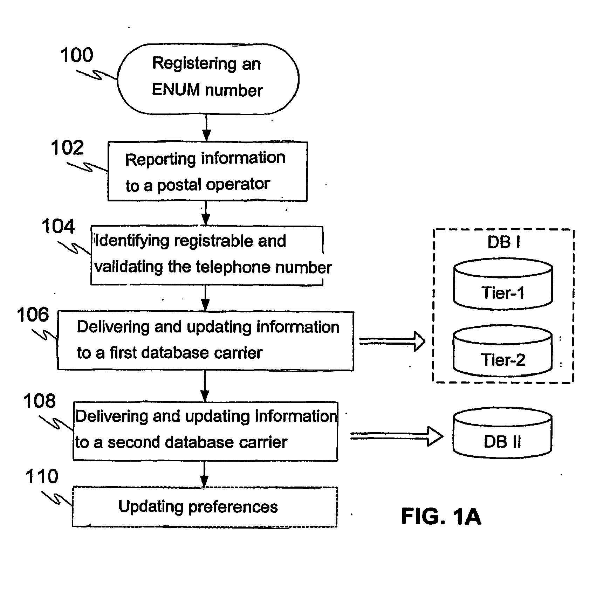

Fig. 1A shows one exemplary method for the registration 100 of an ENUM number in an operator's, such as for example a postal operator's address information system and in the ENUM system, wherein the user, typically registering in step 102, reports his/her particulars, such as a number (for example +35896966634) for his/her mobile communicator, as well as at least one physical delivery address, such as his/her street address, to the postal operator. The user may also submit other delivery address details, such as for example his/her e-mail address (for example "anna.avulias@hotmail.com") and fax number(+3582012345), as well as additionally compile a preference list, according to which the sender is able to select a delivery address from among a plurality of different delivery addresses.

In step 104, the particulars of a user to be registered are received and identified, as well as validated for example by a postal operator. In step 104, it is also possible for a postal operator or the like to make sure that the mobile communicator number submitted by the user has not yet been registered and that it meets the possible formal requirements. Thereafter, in step 106, the particulars are transmitted and updated to a first database carrier (DB-I), which can be implemented for example by means of the above-described Tier servers included in the ENUM system.

According to one example, an ENUM identifier relevant to the ENUM telephone number of a user is stored in a Tier-1 server, and a postal operator server address matching the ENUM identifier is stored in the NAPTR record of a Tier-2 server, as well as a reference is created from the ENUM identifier, present in the Tier-1 server and matching said ENUM telephone number, to said NAPTR record of the Tier-2 server. Thus, the Tier-2 server includes an ENUM identifier (in this case 4.3.6.6.6.9.6.9.8.5.3.e164.arpa) matching the discussed ENUM telephone number, at least one NAPTR record being attached to said identifier in the Tier-2 server. The NAPTR record can be for example a server address for the user's postal operator *"postal: +35896966634@itella.com".* In this example, the user's physical addresses are not entered in the Tier-2 database but, instead, just a reference to the postal operator server address. In addition, the Tier-0 root server can also be updated for enabling it, upon request, to point to the correct Tier-2 server, in which the inquired ENUM telephone number is found. The root server can distinguish Tier-2 servers for example on the basis of ENUM telephone numbers' country codes, such that for example Finnish telephone numbers (with a prefix +358) can be included in the first Tier-1 database and German telephone numbers (with a prefix +49) in the second Tier-1 database. In the Tier-2 database can be basically stored address details as well, but in view of information management, information security, and for making use of previously made decisions regarding address management, it is probably advisable to have the circuitry designed as described in this document.

The first database carrier can be for example subject to the management of some third party or, alternatively, for example the postal operator may serve as a provider of Tier-2 service.

In step 108, the particulars, such as the user's ENUM telephone number (e.g. *+35896966634) or an ENUM identifier relevant thereto,* as well as the user's physical address (e.g. Postintaival 7), are updated also to a second database carrier (DB-II), which can be for example a postal operator's address information system. Thus, upon placing in the first database carrier for example a request for the ENUM number +35896966634, the first database carrier returns a server address for the receiver's postal operator, such as for example *"postal: +35896966634@itella.com",* relevant to the ENUM identifier (4.3.6.6.6.9.6.9.8.5.3.e164.arpa) matching the ENUM telephone number, said server address being matched by the user's actual physical address, such as for example Postintaival 7, present in the database carrier at the postal operator's address *@itella.com.*

Likewise, the second database may include a plurality of delivery addresses, as well as a preference list, whereby the delivery address, such as a physical street address, is selected on the basis of the preference list. The users may also preferably have an option of maintaining their preference list and working on the same for example by means of a service available over the Internet or a mobile communication network. For example, the user is able to prioritize available delivery addresses in such a way that all cards shall be delivered to him/her in the form of a text message, the dispatches (invoices) of a certain supplier in a fax, and other letters and parcels for example by way of an ordinary postal delivery network. According to the above-described method, e.g. the messaging network of a postal operator can be linked with electronic messaging networks by supplementing a Tier-2 service of UN EM technology with a server address for the postal operator of a registering party, e.g. as: @ IN NAPTR 10 100 "u" "E2U+postal:+35896966634@itella.com!", which thus returns to the sender of the message in case the receiver wants the message to be sent in the form of ordinary mail.

The keyword in a NAPTR record is for example postal (=postal services), which reveals to a data terminal that the services associated with this keyword can be found at the address expressed in the record. Thus, the term "postal" is a working title used in this specification for this new concept. In a postal operator's system, the ENUM telephone number can be used for singling out a receiver and channeling a message to a certain postal address of the receiver after the postal operator has converted the electronic message into a format required by the letter. The sender's message is channeled forward according to instructions/preferences provided by the receiver.

In addition, the receiver of messages is able to determine, for example in a contact details management service offered by a postal operator, his/her specific acceptance preferences in step 110 (which can be optional, for example, only to users with several different pre-established delivery addresses and/or modes). The preferences can be stored either on NAPTR records of ENUM technology in a Tier-2 information storage or in a postal operator's address information system.

It should be noted that the Tier servers described herein are but one example, and that other types of servers and information systems can also be applied and employed. It should also be noted that the only example of virtual addresses set forth herein refers to ENUM numbers and to the registration thereof, but a similar process can also be applied to the registration of other virtual addresses, such as, for example, for the registration of static IP addresses for users or a specified random number dedicated to the user. In addition, in the example set forth herein and dealing with ENUM numbers, the distinction of virtual addresses carried by various servers has been established by using country codes of ENUM telephone numbers, but it is obvious that, in the use of other virtual addresses, the distinction can be based on something else, for example distinctions associated with certain numbers or segments of IP identifiers.

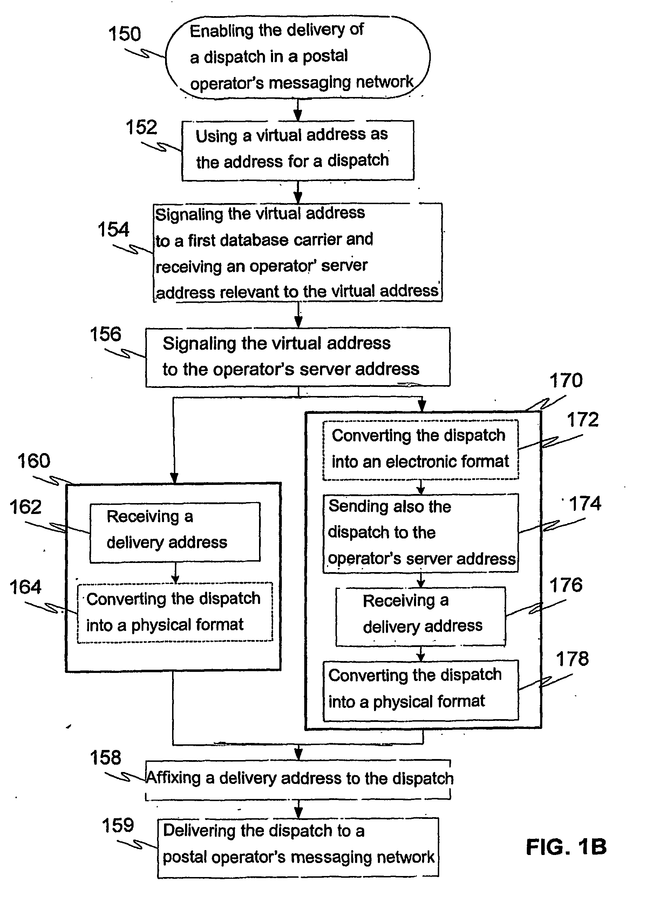

Fig. 1B shows one exemplary method 150 for enabling the delivery of a dispatch in a postal operator's messaging network. In the method, the dispatch is first in step 152 provided with a virtual address singling out the address of a receiver. In the process of sending the dispatch, either a data terminal used by the sender or some other element such as, for example, a telecommunication operator's element, reads and transmits said virtual address used in the dispatch to a first database carrier in step 154. The first database carrier is adapted to accept said virtual address and to return from its database an operator's server address relevant to said virtual address. In step 156, said virtual address is transmitted to said operator's server address returned by the first database carrier, which server address in turn returns, in response to signaling, a delivery address relevant to this particular virtual address.

Fig. 1B shows two different examples 160 and 170 for implementing the method 150, in which example 160 the delivery address returned by an operator is received in step 162 by an element that has most preferably signaled the virtual address. After this, said dispatch can be converted into a physical format in step 164 provided that the dispatch was originally for example in an electronic format. According to one example, the dispatch could have been originally for example an e-mail or a multimedia message, which is printed on paper for a letter or a card. Step 164 is nevertheless optional (the dispatch can also be originally in a physical format, such as for example in the form of a parcel, in which case the virtual address is read for example optically from above the parcel prior to conducting step 154).

According to the other example 170, in the process of signaling a virtual address (step 156), the actual dispatch to be delivered is also concurrently sent to said operator's server address in step 174. In the event that the dispatch was originally a physical dispatch convertible into an electronic format, the dispatch shall be converted to an electronic one in step 172 before being transmitted to an operator's server address. Such a situation may arise for example when the dispatch is a scannable letter. However, step 172 is optional and only conducted in the event that a physical dispatch can be converted into an electronic format. For example, the example 170 cannot be used for delivering physical dispatches of the type, such as for example physical parcels, which cannot be converted into electronic ones.

Thus, according to the example 170, there is transmitted both a virtual address and a dispatch in electronic format to said operator's server address, at which the server has an access to the information of a second database carrier. In response to said signaling of a virtual address, a delivery address relevant to said virtual address shall be returned. According to one embodiment, for example the second database carrier is adapted to return said delivery address in response to the signaling of said virtual address. The delivery address is adapted to be returned, according to the method 150, either to an operator (example 170) or to some other element (example 160).

According to the example 170, for example said operator receives said delivery address in step 176, after which the dispatch presently in an electronic format can be converted into a physical format in step 178.

Steps 158 and 159 are common to the examples 160 and 170 of the method 150, in which step 158 the dispatch presently in a physical format has attached thereto a delivery address matching said virtual address. After this, in step 159, said dispatch is delivered in a postal operator's messaging network to the delivery address matching the virtual address.

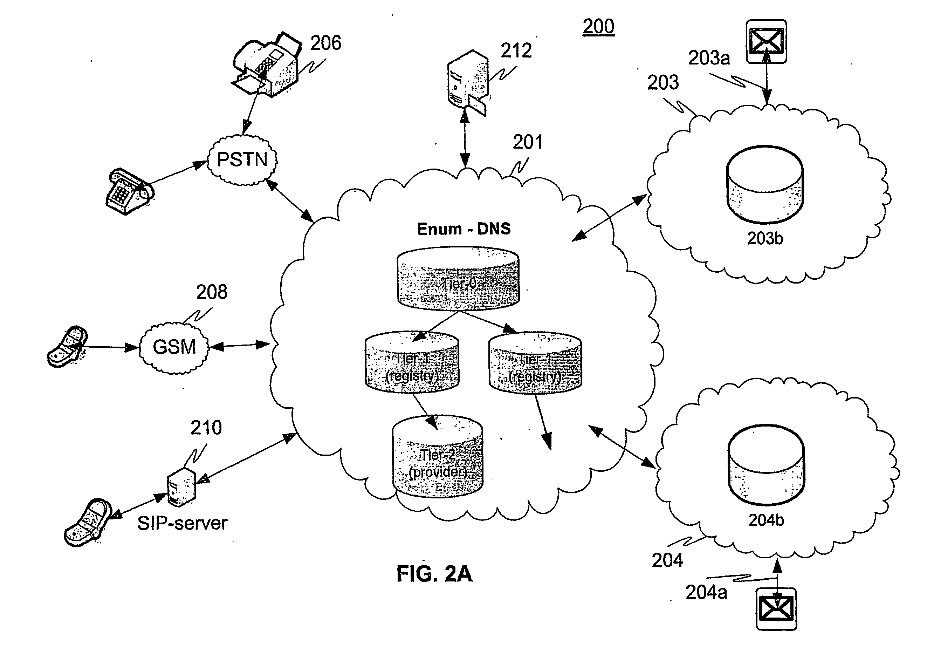

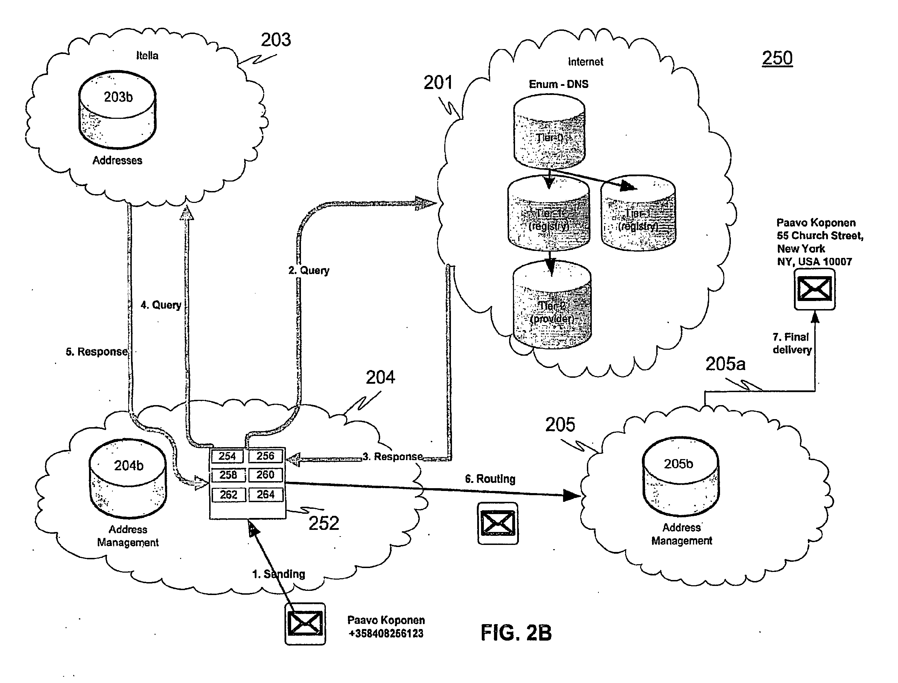

Fig. 2A shows an exemplary system 200, along with its database configuration, for enabling the delivery of a dispatch in a postal operator's 203, 204 messaging network 203a, 204a, according to one embodiment of the invention, wherein the database configuration can have its first database carrier 201 comprising for example Tier-0, Tier-1, and Tier-2 servers, especially the number of Tier-1 and Tier-2 servers being possibly more than one of each. The system comprises also a second database carrier, such as for example address information systems 203b, 204b for the postal operators 203, 204. In the example of fig. 2, the employed operator is a postal operator, but according to another embodiment of the invention, the operator can also be a mobile communication or Internet operator.

Upon registering, the user has his/her virtual address, for example his/her ENUM telephone number, and physical delivery address stored in the database carriers 203b, 204b of a postal operator. In addition, the ENUM telephone number and a corresponding ENUM identifier, as well as a postal operator's server address, are stored in the Tier servers, as described in reference to fig. 1.

In the system 200 according to the invention, the sender can make a dispatch for example by means of an optical reader 206, by his/her mobile communicator through the intermediary of a mobile telephone operator 208, or by using an SIP server 210 or a postal server 212. According to the invention, the sender transmits the dispatch by using a receiver's virtual address, for example ENUM telephone number, whereby the sender's data terminal or alternatively some other device, such as the operator's network element or the like, included in a data communication network, signals the receiver's virtual address, for example ENUM telephone number, to the first database carrier 201 which returns, as a response, a postal operator's server address relevant to said virtual address. Thus, the dispatch is most preferably transmitted, along with said virtual address, to this particular postal operator's 203, 204 server address, whereby the postal operator, after receiving the discussed dispatch, reads a delivery address matching said virtual address on the second database carrier 203b, 204b and uses this in the process of delivering the dispatch to the receiver in its messaging network 203a, 204a.

Fig. 1B shows another exemplary system 250, along with its database configuration, for enabling the delivery of a dispatch in a postal operator's 205 messaging network 205a, wherein step 1 comprises sending a letter (a physical consignment) for example from New Zealand (for example an NZ postal operator 204) to Paavo Koponen whose address is represented for example by a virtual address +358408256123. In the example, the operator 204 has its system 252 preferably comprising elements 254 for detecting the virtual address used as the receiver's address, and elements 256 for signaling said virtual address (step 2) to a first database carrier 201. In this example, the system 252 is also adapted to convert the ENUM telephone number used as the virtual address into a corresponding ENUM identifier prior to signaling (step 2), whereby the format to be signaled can be for example 3.2.1.6.5.2.8.0.4.8.5.3.e164.arpa.

In the system 250, the first database carrier is adapted to return (step 3), as a response, a postal operator's server address matching said virtual address, which in this case is a Finnish postal operator's server address @itella.com. Most preferably, the first database carrier returns, along with said operator's server address, also said virtual address, whereby the feedback can be for example in a format: +358408256123@itella.com.

The system 250 also preferably comprises elements 258 for receiving the operator's server address returned by the first database carrier 201, as well as elements 260 for signaling said virtual address to said operator's 203 server address (step 4), for example in a format: +358408256123@itella.com. Said operator has preferably an access to the records of a second database carrier 203b, wherein said virtual address is matched by a delivery address. In this exemplary case, it is quite obvious that the delivery address of Paavo Koponen has been a Finnish address sometime in the past, but he has placed for example a forwarding order with the Finnish postal operator, such that the delivery address is actually for example "55 Church Street, New York, NY, USA, 10007".

The second database carrier is adapted to return a delivery address matching said virtual address most preferably to said operator 203 and further to the operator's 204 system 252 (step 5). The system 252 also preferably comprises elements 262 for receiving a delivery address, as well as elements 264 for address-marking a letter (dispatch) with said delivery address, and elements 266 for delivering the letter (step 6) to a postal operator 205 serving the delivery address, the latter in turn delivering the letter in its own messaging network 205a to said delivery address.

The dispatch to be delivered in the example of fig. 2B is a physical letter. According to another exemplary embodiment, the dispatch can be converted into an electronic format, whereby, according to one embodiment, the electronic dispatch can be delivered to the operator 203 along with the signaling of a virtual address (step 4), which operator can then advance the dispatch in electronic format to a delivery-address serving postal operator's 205 server address, and it is not until at this point that the postal operator 205 prints said letter and attaches the actual delivery address to it. On the other hand, according to another example, the operator's 204 system is also capable of delivering an electronic dispatch (step corresponding to step 6) to the delivery-address serving postal operator's 205 server address, after first acquiring the delivery address in step 5. For illustrative reasons, though, these options have not been shown in fig. 2B.

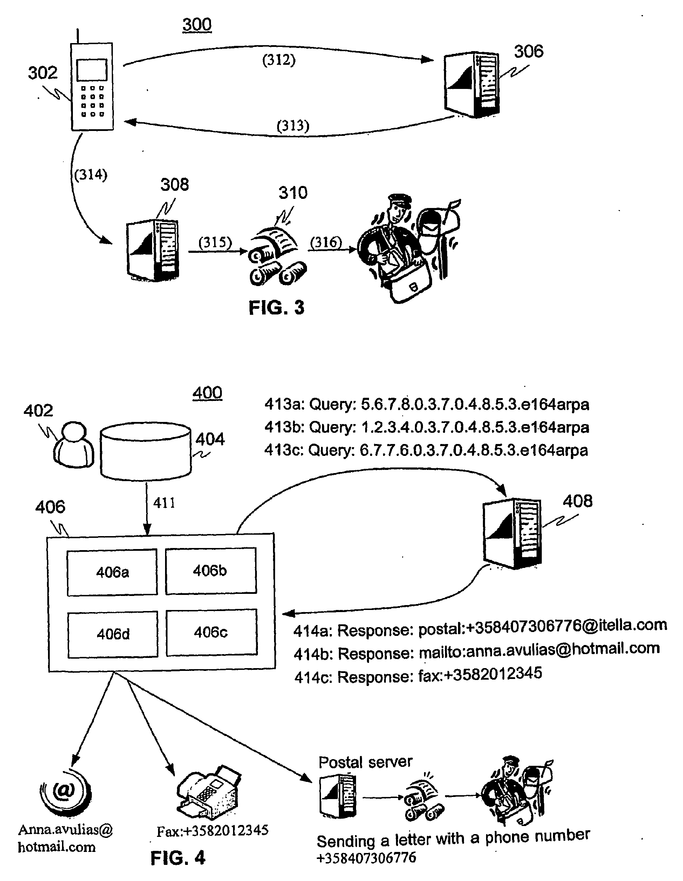

Fig. 3 shows one exemplary system 300 for delivering an electronic message, such as for example an image message, in the form of a physical letter in a postal operator's messaging network by using ENUM technology. In the example, the sender of an electronic message has at his/her disposal a data terminal 302 adapted to convert a receiver's ENUM telephone number (e.g. +358407306776) into a matching ENUM identifier (6.7.7.6.0.3.7.0.4.8.5.3.e164.arpa) and to query (step 312) a DNS server 306 (the first database carrier) for at least one NAPTR record matching the ENUM identifier. The conversion from phone number to ENUM identifier can also performed by a telecompany's network element.

It is a default in this example that the receiver and/or the sender prefers ordinary mail as a means of communication, whereby the DNS server 306 returns (step 313) to the data terminal 302 a receiver-serving postal operator's 308 server address, such as for example "postal: +358407306776@itella.com". Said data terminal 302 is preferably adapted to receive said postal operator's server address and to transmit (step 314) to said postal operator's server address. It should be noted that the root address (@itella.com) of a postal operator's server is preferably supplemented with the receiver's ENUM telephone number (+358407306776), on the basis of which the postal operator 308 knows how to pick up from the second database carrier (not shown in this figure) a delivery address matching this particular ENUM telephone number and a receiver linked therewith, as well as to proceed along alternative routes as described elsewhere in this document. The postal operator 308 can, for example, print said message for a physical letter by means of outputting elements 310 (step 315) and address-mark the letter with a physical address (name + street address) matching the ENUM telephone number, after which said physical letter can be delivered in the postal operator's messaging network in a traditional manner (step 316).

In the example, the data terminal 302, such as a mobile communicator or a computer in communication with a data transfer network, is adapted to signal the receiver's ENUM telephone number to a first database carrier. The signaling can be optionally conducted by some other network element, as described elsewhere in this document.

It should further be noted that the dispatch to be sent may originally be a physical consignment, such as a letter, which is convertible into an electronic format and which, according to the example shown in fig. 3, can be first translated into an electronic format and then delivered to a receiver, for example as illustrated in the example shown in fig. 3.

Fig. 4 shows one exemplary system 400 for communicating a message by a multichannel mode in a postal operator's messaging network by using ENUM technology. In the example, a message sender 402 (e.g. a major biller) compiles the electronic material in an agreed letter format, such as for example Itella's iPost-format, and uses an ENUM number as the receiver's address. The sender is able to deliver the material from his/her postal server 404, or by means of some other dispatching element, for example to a mailing system or device 406 offered by a third party. According to one example, this mailing system may also be a service provided by the postal operator.

The mailing system 406 is preferably adapted to receive said material to be dispatched (step 411, element 406a) and to signal (step 413, element 406b) the receiver's ENUM telephone number, relevant to each dispatch, to a first database carrier 408. The mailing system may have its element 406b adapted to conduct a conversion from ENUM telephone number to ENUM identifier, as presented in fig. 4, or, alternatively, said conversion can be conducted by some other element corresponding to the element 406b.

In any event, in the example of fig. 4, the first database carrier has its DNS server supplied with ENUM identifiers matching the ENUM telephone numbers, as illustrated in steps 413a, 413b, 413c of fig. 4, the DNS server being adapted to return an NAPTR record matching each ENUM identifier as illustrated in steps 414a, 414b, 414c of fig. 4.

The mailing system has its element 406c preferably adapted to receive said NAPTR records and to address-mark said dispatches again with addresses set forth in the NAPTR records, as well as to send the dispatches to said addresses by means of elements 406d. After being provided with a delivery address (type of message) preferred by the receiver, the dispatch is converted into a format consistent with an electronic type of message, such as for example into a fax, a text message or an e-mail.

According to the example of fig. 4, the address designated by an NAPTR record can be for example a receiver-serving postal operator's server address in case the receiver prefers traditional mail, a receiver's fax number in case the receiver prefers a fax machine, or an e-mail address in case the receiver prefers electronic mail. The selection of a delivery address is influenced both by the preferences of a receiver and by the requirements set by a sender.

The NAPTR record consistent with the example 414a of fig. 4 points to a receiver-serving postal operator's server, said dispatch being delivered to this postal operator's server (@itella.com), whereby said postal operator is adapted to pick up from the second database carrier a delivery address matching the receiver's ENUM telephone number preferably supplied in connection with said dispatch, and to proceed in any of the alternative modes described elsewhere in this document.

The example of fig. 4 differs for example from that shown in fig. 3 in such a way, among other things, that the operation is typically used for dealing with high-volume mailing batches. The ENUM-backed data terminal is replaced by a mailing system element most preferably implemented by means of software, wherein said software is adapted to clarify the actual electronic or physical delivery addresses.

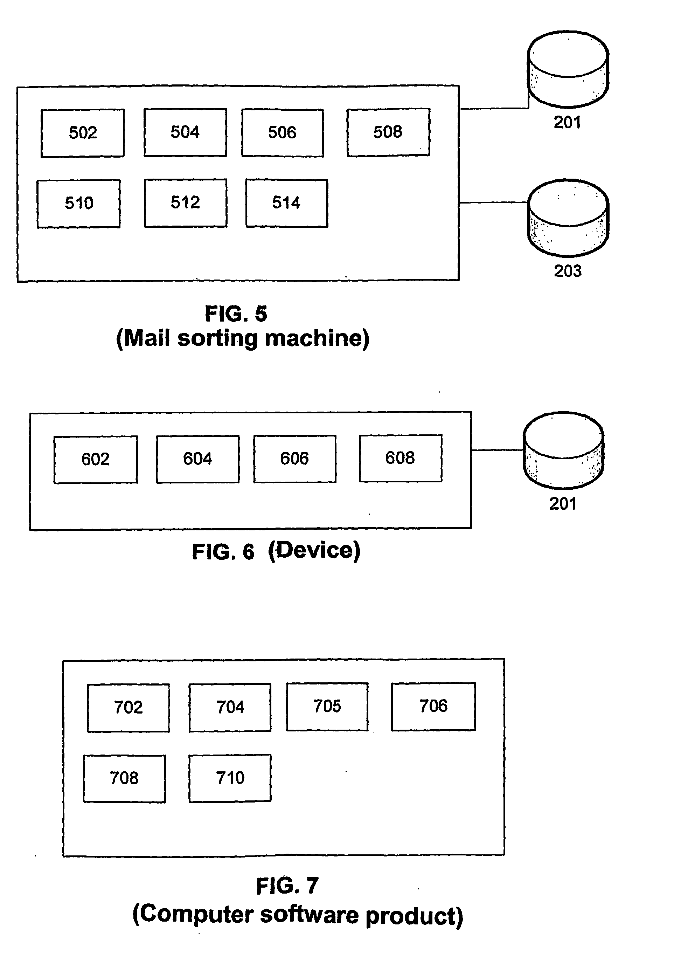

Fig. 5 shows one exemplary mail sorting machine 500 for delivering a dispatch in a postal operator's messaging network. Upon its arrival at the mail sorting machine, the dispatch has either been converted into a physical format or, alternatively, the dispatch has even originally been in a physical format, such as for example in the form of a postal parcel, in which case the receiver-specifying virtual address has most preferably been affixed to the dispatch in such a form that the mail sorting machine is able to identify said virtual address. The virtual address, which, according to one example, is a receiver's ENUM telephone number, can be expressed for example in digits, alphabets, symbols, a bar code, a 2D bar code, a piece of information carried by an RFID tag, or as a combination of any of these or as another similar data recording or presenting mode known to a skilled artisan.

The mail sorting machine 500 comprises typically elements 502 for identifying a receiver's virtual address, such as ENUM telephone number, from a dispatch, elements 504 for signaling the identified virtual address of a receiver to a first database carrier 201, elements 506 for receiving from the first database carrier an operator's server address matching the virtual address, elements 508 for signaling the virtual address to said server address of an operator 203, as well as elements 510 for receiving said delivery address in response to signaling.

In addition, the mail sorting machine 500 comprises elements 512 for affixing said delivery address to a dispatch, as well as elements 514 for sorting the dispatch according to said delivery address.

According to one simpler example, the mail sorting machine only comprises the elements 502 and 508-514, but not the elements 504 and 506. According to one example, at least some of said elements are established programmatically.

According to one example, the mail sorting machine 500 is adapted to classify a dispatch for a correct country just on the basis of a country code in the ENUM telephone number, particularly in such a case that the ENUM telephone number, or a delivery address matching it, cannot be found in a second database carrier used by this particular mail sorting machine.

Fig. 6 shows one device 600, such as a mobile communicator, for enabling the delivery of a dispatch in a postal operator's messaging network by using a virtual address, such as an ENUM telephone number, as the receiver's address, according to one embodiment of the invention. In particular, the device 600 is applicable in the systems 200, 250, 300, 400, 500 of figs. 2A, 2B, 3, 4 or 5. According to one embodiment of the invention, the device 600 may also be a mobile communication or Internet operator's network element, which is adapted to capture a dispatch and to subject the device 600 to specific procedures described in this example.

The device 600 comprises preferably elements 602 for signaling a virtual address, used as the receiver's address, to a first database carrier 201, wherein the first database carrier is adapted to return, in response to signaling, at least an operator's server address relevant to said virtual address. The device 600 comprises also elements 604 for receiving said operator's server address, as well as elements 606 for signaling the virtual address to said operator's server address. The elements 606 can also be adapted to convey an electronic dispatch to said operator's server address. According to one embodiment of the invention, the device may also be adapted to receive a delivery address matching the virtual address on a second database carrier.

According to one embodiment of the invention, the device 600 may also comprise elements 608 for converting an ENUM telephone number into an ENUM identifier prior to signaling to the first database carrier. The operator can be for example a mobile communication or Internet operator, or, alternatively, a postal operator.

Fig. 7 shows one exemplary computer software product 700 for enabling the delivery of a dispatch in a postal operator's messaging network according to one embodiment of the invention. In particular, the computer software product 700 lends itself to be run in hardware (e.g. 252, 302, 304, 406, 500) used for the systems 200, 250, 300, 400, 500 of figs. 2A, 2B, 3, 4 or 5, or in the device 600 of fig. 6, or, according to one embodiment of the invention, in a mobile communication or Internet operator's network element, in which case the computer software product is adapted to capture a dispatch and to subject the computer software product 700 to specific procedures described in this example as said computer software product is run in a teleoperator's network element.

The computer software product 700 comprises preferably software elements 702 for signaling a virtual address, used as the receiver's address, to a first database carrier 201, wherein the first database carrier is adapted to return, in response to signaling, at least an operator's server address relevant to said virtual address. The computer software product 700 comprises also software elements 704 for receiving said operator's server address, as well as software elements 705 for signaling at least said virtual address to said postal operator's server address. Software elements 706 can be adapted to transmit also an electronic dispatch to said operator's server address. According to one embodiment of the invention, the computer software product may also comprise elements 708 for receiving a delivery address matching the virtual address on a second database carrier 203.

According to one embodiment of the invention, the computer software product 700 may also comprise elements 710 for converting an ENUM telephone number into an ENUM identifier prior to signaling to the first database carrier. The operator can be for example a mobile communication or Internet operator, or, alternatively, a postal operator.

Presented above are but a few embodiments for a solution of the invention. A principle according to the invention may naturally be modified within the scope of protection defined in the claims, regarding for example configuration details as well as application fields. In particular, the method can be applied both in a sender's data terminal and also elsewhere in a delivery network used for the transfer of a dispatch, such as in a teleoperator's network element and/or on the part of a postal operator. It is particularly notable that the operator can be a mobile communication or Internet operator or a postal operator, and that the virtual address can be an ENUM telephone number, but also some other virtual address, such as for example an IP address designated for the user or a specified random number, even though many of the above-described examples only employ an ENUM-technology based virtual address as an example.

## Claims

1. A system (200, 250) for enabling a delivery of a dispatch in a postal operator's (203, 204, 205) messaging network (203a, 204a, 205a), wherein the receiver's address used in the dispatch comprises a receiver-specifying virtual address and that the system (200, 250) is adapted to:
a) signal said virtual address to a first database carrier (201) for returning, in response to said signaling, an operator's (203, 204, 205) server address relevant to said virtual address on the first database carrier (201),
b) signal said virtual address to said operator's (203, 204, 205) server address for returning, in response of said signaling, a delivery address relevant to said virtual address on a second database carrier (203b, 204b, 205b), whose records are accessible to said operator (203, 204, 205), convert the dispatch from a physical format into an electronic format and send said dispatch in the electronic format along with said virtual address to said operator's (203, 204, 205) server address for delivery of the dispatch to the receiver in the operator's (203, 204, 205) messaging network (203a, 204a, 205a), and
c) convert said dispatch into a physical format and use said delivery address for enabling a delivery of the dispatch in the physical format in said operator's (203, 204, 205) messaging network (203a, 204a, 205a).

2. A system as set forth in any of the preceding claims, wherein the receiver-specifying virtual address, for example a receiver's ENUM telephone number, is expressed in digits, alphabets, symbols, a bar code, a 2D bar code, a piece of information carried on an RFID tag, or as a combination of any of these.

3. A system as set forth in any of the preceding claims, wherein the system is adapted to convert an ENUM telephone number into an ENUM identifier prior to signaling to the first database carrier.

4. A system as set forth in any of the preceding claims, wherein
- the first database carrier comprises a preference list of at least two different addresses or operator's server addresses, the system being adapted to select the applied address or operator's server address according to preferences defined by a receiver and/or a sender of the dispatch, and/or
- the second database carrier comprises a preference list of at least two different delivery addresses, the system being adapted to select the applied delivery address according to preferences defined by a receiver and/or a sender of the dispatch.

5. A system as set forth in any of the preceding claims, wherein the original dispatch is a physical consignment convertible into an electronic format, the system being adapted to convert said dispatch into an electronic one prior to a delivery of the dispatch.

6. A system as set forth in any of the preceding claims, wherein the dispatch to be delivered is in an electronic format, the system being adapted to convert the dispatch into a physical format prior to an ultimate delivery of the dispatch to a receiver in the postal operator's messaging network.

7. A system as set forth in claim 6, wherein the system is adapted to output on said physical consignment a delivery address relevant to the virtual address.

8. A system as set forth in any of the preceding claims, wherein the operator is a postal operator, a mobile communication operator or an Internet operator.

9. A system as set forth in any of the preceding claims, wherein the dispatch comprises virtual contact information for a sender, such as an ENUM telephone number, and wherein the system is adapted to supply the sender with information about a status of the dispatch delivery by using said contact information.

10. A system as set forth in any of the preceding claims, wherein the receiver-specifying virtual address is for example a receiver's ENUM telephone number, and wherein the system is adapted to supply the receiver with information about a status of the dispatch delivery by using said receiver-specifying virtual address, for example the ENUM telephone number.

11. A method (150, 170) for enabling the delivery of a dispatch in a postal operator's (203, 204, 205) messaging network (203a, 204a, 205a), wherein the method (150, 170) comprises
a) using (152) a receiver-specifying virtual address as the receiver's address on the dispatch,
b) signaling (154) said virtual address to a first database carrier (201) for returning, in response to said signaling, an operator's (203, 204, 205) server address relevant to said virtual address on the first database carrier (201),
c) signaling (156) said virtual address to said operator's (203, 204, 205) server address for returning, in response to said signaling, a delivery address relevant to said virtual address on a second database carrier (203b, 204b, 205b), whose records are accessible to said operator (203, 204, 205), converting (172) the dispatch from a physical format into an electronic format and sending (174) said dispatch in the electronic format along with said virtual address to said operator's (203, 204, 205) server address for delivery of the dispatch to the receiver in the operator's (203, 204, 205) messaging network (203a, 204a, 205a), and
d) convert (178) said dispatch into a physical format and using said delivery address for enabling a delivery of the dispatch in the physical format in said operator's (203, 204, 205) messaging network (203a, 204a, 205a).

12. A method as set forth in claim 11, wherein the receiver-specifying virtual address, for example a receiver's ENUM telephone number, is expressed in digits, alphabets, symbols, a bar code, a 2D bar code, a piece of information carried on an RFID tag, or as a combination of any of these.

13. A method as set forth in claim 11, wherein the ENUM telephone number is converted into an ENUM identifier prior to signaling to the first database carrier.

14. A method as set forth in any of claims 11 to 13, wherein
- the first database carrier comprises a preference list of at least two different operator's server addresses, the applied operator's server address being selected according to preferences defined by a receiver and/or a sender of the dispatch, and/or
- the second database carrier comprises a preference list of at least two different delivery addresses, the applied delivery address being selected according to preferences defined by a receiver and/or a sender of the dispatch.

15. A method as set forth in any of claims 11 to 14, wherein the original dispatch is a physical consignment convertible into an electronic format, said dispatch being converted into an electronic one prior to a delivery of the dispatch.

16. A method as set forth in any of claims 11 to 15, wherein the dispatch to be delivered is in an electronic format, said dispatch being converted into a physical format prior to an ultimate delivery of the dispatch to a receiver in the postal operator's messaging network.

17. A method as set forth in claim 16, wherein said physical consignment is output with a delivery address relevant to the virtual address.

18. A method as set forth in any of claims 11 to 17, wherein the operator is a postal operator, a mobile communication operator or an Internet operator.

19. A method as set forth in any of claims 11 to 18, wherein the dispatch comprises virtual contact information for a sender, such as an ENUM telephone number, and wherein the sender is supplied with information about a status of the dispatch delivery by using said contact information.

20. A method as set forth in any of claims 11 to 19, wherein the receiver-specifying virtual address is for example a receiver's ENUM telephone number, and wherein the receiver is supplied with information about a status of the dispatch delivery by using said receiver-specifying virtual address, for example the ENUM telephone number.

21. A device for use in a system as set forth in any of claims 1-8, wherein said device is adapted to
a) signal, in the process of sending a dispatch, said virtual address to a first database carrier (201), as well as receive an operator's (203, 204, 205) server address, which is relevant to said virtual address and returned by said first database carrier (201) in response to signaling, and
b) signal said virtual address to said operator's (203, 204, 205) server address for returning, in response to said signaling, a delivery address relevant to said virtual address on a second database carrier (203b, 204b, 205b), whose records are accessible to the operator (203, 204, 205), convert the dispatch from a physical format into an electronic format and send said dispatch in the electronic format along with said virtual address to said operator's (203, 204, 205) server address for delivery of the dispatch to the receiver in a physical format in the operator's (203, 204, 205) messaging network (203a, 204a, 205a).

22. A device as set forth in claim 21, wherein the device is adapted to convert the ENUM telephone number into an ENUM identifier prior to signaling to the first database carrier, in which said ENUM telephone number is expressed in digits, alphabets, symbols, a bar code, a 2D bar code, a piece of information carried on an RFID tag, or as a combination of any of these.

23. A device as set forth in claim 21 or 22, wherein the device is a sender's electronic data terminal, such as a mobile communicator, or an operator's network element, a device managed by an operator, or an integrated circuit.

24. A computer software product (700) for enabling the delivery of a dispatch in a postal operator's (203, 204, 205) messaging network (203a, 204a, 205a), wherein the computer software product (700) comprises software elements, which are adapted to
a) use a receiver-specifying virtual address as the receiver's address on the dispatch,
b) signal (702) said virtual address to a first database carrier (201) for returning, in response to said signaling, an operator's (203, 204, 205) server address relevant to said virtual address on the first database carrier (201),
c) signal (705) said virtual address to said operator's (203, 204, 205) server address for returning, in response to said signaling, a delivery address relevant to said virtual address on a second database carrier (203b, 204b, 205b), whose records are accessible to said operator (203, 204, 205), convert the dispatch from a physical format into an electronic format and send (706) said dispatch in the electronic format along with said virtual address to said operator's (203, 204, 205) server address for delivery of the dispatch to the receiver in the operator's (203, 204, 205) messaging network (203a, 204a, 205a), and
d) convert said dispatch into a physical format and use said delivery address for enabling a delivery of the dispatch in the physical format in the postal operator's (203, 204, 205) messaging network (203a, 204a 205a),
as said computer software product is run in a device as set forth in any of claims 21 to 23.

25. A computer software product as set forth in claim 24, wherein the computer software product is adapted to convert the ENUM telephone number into an ENUM identifier prior to signaling to the first database carrier, in which said ENUM telephone number is expressed in digits, alphabets, symbols, a bar code, a 2D bar code, a piece of information carried on an RFID tag, or as a combination of any of these, as said computer software product is run in a device as set forth in any of claims 21 to 23.

## Patentansprüche

1. System (200, 250) zum Ermöglichen einer Lieferung einer Sendung in einem Benachrichtungsnetzwerk (203a, 204a, 205a) eines Postbetreibers (203, 204, 205), worin die in der Sendung verwendete Empfängeradresse eine empfängerspezifizierende virtuelle Adresse aufweist, und dass das System (200, 250) ausgelegt ist zum:
a) Melden der virtuellen Adresse zu einem ersten Datenbankträger (201), um in Antwort auf die Meldung eine Serveradresse des Betreibers (203, 204, 205), welche für die virtuelle Adresse auf dem ersten Datenbankträger (201) relevant ist, rückzusenden,
b) Melden der virtuellen Adresse zu der Serveradresse des Betreibers (203, 204, 205), um in Antwort auf die Meldung eine Lieferadresse, die für die virtuelle Adresse auf einem zweiten Datenbankträger (203b, 204b, 205b) relevant ist, rückzusenden, dessen Aufzeichnungen für den Betreiber (203, 204, 205) zugänglich sind, Umwandeln der Sendung von einem physikalischen Format in ein elektronisches Format, und Senden der Sendung im elektronischen Format zusammen mit der virtuellen Adresse zu der Serveradresse des Betreibers (203, 204, 205), um die Sendung an den Empfänger zu liefern, in dem Benachrichtigungsnetzwerk (203a, 204a, 205a) des Betreibers (203, 204, 205), und
c) Umwandeln der Sendung in ein physikalisches Format und Verwenden der Lieferadresse zum Ermöglichen einer Lieferung der Sendung im physikalischen Format, in dem Benachrichtigungsnetzwerk (203a, 204a, 205a) des Betreibers (203, 204, 205).

2. System nach einem der vorhergehenden Ansprüche, worin die empfängerspezifizierende virtuelle Adresse, z.B. eine ENUM Telefonnummer eines Empfängers, in Digits, Alphabeten, Symbolen, einem Strichcode, einem 2D-Strichcode, einem auf einem RFID-Tag getragenen Informationsstück oder als Kombination von beliebigen von diesen ausgedrückt ist.

3. System nach einem der vorhergehenden Ansprüche, worin das System dazu ausgelegt ist, vor der Meldung an den ersten Datenbankträger eine ENUM Telefonnummer in einen ENUM Identifizierer umzuwandeln.

4. System nach einem der vorhergehenden Ansprüche, worin
- der erste Datenbankträger eine Präferenzliste von zumindest zwei unterschiedlichen Adressen oder Serveradressen des Betreibers aufweist, wobei das System dazu ausgelegt ist, die angewendete Adresse oder Serveradresse des Betreibers gemäß Präferenzen auszuwählen, welche durch einen Empfänger und/oder einen Absender der Sendung definiert sind, und/oder
- der zweite Datenbankträger eine Präferenzliste von zumindest zwei unterschiedlichen Lieferadressen aufweist, wobei das System dazu ausgelegt ist, die angewendete Lieferadresse gemäß Präferenzen auszuwählen, welche durch einen Empfänger und/oder Absender der Sendung definiert sind.

5. System nach einem der vorhergehenden Ansprüche, worin die ursprüngliche Sendung eine physikalische Zusendung ist, welche in ein elektronisches Format umwandelbar ist, wobei das System dazu ausgelegt ist, vor einer Lieferung der Sendung, die Sendung in eine elektronische umzuwandeln.

6. System nach einem der vorhergehenden Ansprüche, worin die zu liefernde Sendung in einem elektronischen Format ist, wobei das System dazu ausgelegt ist, vor einer letztlichen Auslieferung der Sendung zu einem Empfänger in dem Benachrichtungsnetzwerk des Postbetreibers, die Sendung in ein physikalisches Format umzuwandeln.

7. System nach Anspruch 6, worin das System dazu ausgelegt ist, auf der physikalischen Zusendung eine Lieferadresse auszugeben, welche für die virtuelle Adresse relevant ist.

8. System nach einem der vorhergehenden Ansprüche, worin der Betreiber ein Postbetreiber, ein Mobilkommunikationsbetreiber oder ein Internetbetreiber ist.

9. System nach einem der vorhergehenden Ansprüche, worin die Sendung virtuelle Kontaktinformation für einen Absender aufweist, wie etwa eine ENUM Telefonnummer, und worin das System dazu ausgelegt ist, den Absender mit Information über einen Status der Sendungslieferung unter Verwendung der Kontaktinformation zu versorgen.

10. System nach einem der vorhergehenden Ansprüche, worin die empfängerspezifizierende virtuelle Adresse z.B. eine ENUM Telefonnummer des Empfängers ist, und worin das System dazu ausgelegt ist, den Empfänger mit Information über einen Status der Sendungslieferung unter Verwendung der empfängerspezifizierenden virtuellen Adresse zu versorgen, z.B. der ENUM Telefonnummer.

11. Verfahren (150, 170) zum Ermöglichen der Lieferung einer Sendung in einem Benachrichtigungsnetzwerk (203a, 204a, 205a) eines Postbetreibers (203, 204, 205), wobei das Verfahren (150, 170) umfasst:
a) Verwenden (152) einer empfängerspezifizierenden virtuellen Adresse als Empfängeradresse auf der Sendung,
b) Melden (154) der virtuellen Adresse zu einem ersten Datenbankträger (201), um in Antwort auf die Meldung eine Serveradresse des Betreibers (203, 204, 205), welche für die virtuelle Adresse auf dem ersten Datenbankträger (201) relevant ist, rückzusenden,
c) Melden (156) der virtuellen Adresse an die Serveradresse des Betreibers (203, 204, 205), um in Antwort auf die Meldung eine Lieferadresse, die für die virtuelle Adresse auf einem zweiten Datenbankträger (203b, 204b, 205b) relevant ist, dessen Aufzeichnungen für den Betreiber (203, 204, 205) zugänglich sind, rückzusenden, Umwandeln (172) der Sendung von einem physikalischen Format in ein elektronisches Format, und Senden (174) der Sendung in dem elektronischen Format zusammen mit der virtuellen Adresse zu der Serveradresse des Betreibers (203, 204, 205), um die Sendung an den Empfänger zu liefern, in dem Benachrichtigungsnetzwerk (203a, 204a, 205a) des Betreibers (203, 204, 205), und
d) Umwandeln (178) der Sendung in ein physikalisches Format und Verwenden der Lieferadresse zum Ermöglichen einer Lieferung der Sendung im physikalischen Format, in dem Benachrichtigungsnetzwerk (203a, 204a, 205a) des Betreibers (203, 204, 205).

12. Verfahren nach Anspruch 11, worin die empfängerspezifizierende virtuelle Adresse, z.B. eine ENUM Telefonnummer eines Empfängers, in Digits, Alphabeten, Symbolen, einem Strichcode, einem 2D-Strichcode, einem auf einem RFID-Tag getragenen Informationsstück oder als Kombination von beliebigen von diesen ausgedrückt ist.

13. Verfahren nach Anspruch 11, worin vor der Meldung an den ersten Datenbankträger eine ENUM Telefonnummer in einen ENUM Identifizierer umgewandelt wird.

14. Verfahren nach einem der Ansprüche 11 bis 13, worin
- der erste Datenbankträger eine Präferenzliste von zumindest zwei unterschiedlichen Serveradressen des Betreibers aufweist, wobei die angewendete Serveradresse des Betreibers gemäß Präferenzen ausgewählt wird, welche durch einen Empfänger und/oder einen Absender der Sendung definiert sind, und/oder
- der zweite Datenbankträger eine Präferenzliste von zumindest zwei unterschiedlichen Lieferadressen aufweist, wobei die angewendete Lieferadresse gemäß Präferenzen ausgewählt wird, welche durch einen Empfänger und/oder Absender der Sendung definiert sind.

15. Verfahren nach einem der Ansprüche 11 bis 14, worin die ursprüngliche Sendung eine physikalische Zusendung ist, welche in ein elektronisches Format umwandelbar ist, wobei vor einer Lieferung der Sendung die Sendung in eine elektronische umgewandelt wird.

16. Verfahren nach einem der Ansprüche 11 bis 15, worin die zu liefernde Sendung in einem elektronischen Format ist, wobei vor einer letztlichen Auslieferung der Sendung zu einem Empfänger in den Benachrichtungsnetzwerk des Postbetreibers die Sendung in ein physikalisches Format umgewandelt wird.

17. Verfahren nach Anspruch 16, worin die physikalische Zusendung mit einer Lieferadresse ausgegeben wird, welche für die virtuelle Adresse relevant ist.

18. Verfahren nach einem der Ansprüche 11 bis 17, worin der Betreiber ein Postbetreiber, ein Mobilkommunikationsbetreiber oder ein Internetbetreiber ist.

19. Verfahren nach einem der Ansprüche 11 bis 18, worin die Sendung virtuelle Kontaktinformation für einen Absender aufweist, wie etwa eine ENUM Telefonnummer, und der Absender mit Information über einen Status der Sendungslieferung unter Verwendung der Kontaktinformation versorgt wird.

20. Verfahren nach einem der Ansprüche 11 bis 19, worin die empfängerspezifizierende virtuelle Adresse z.B. eine ENUM Telefonnummer des Empfängers ist, und worin der Empfänger mit Information über einen Status der Sendungslieferung unter Verwendung der empfängerspezifizierenden virtuellen Adresse versorgt wird, z.B. der ENUM Telefonnummer.

21. Vorrichtung zur Verwendung in einem System nach einem der Ansprüche 1 bis 8, worin die Vorrichtung ausgelegt ist zum:
a) Melden, in dem Prozess des Sendens einer Sendung, der virtuellen Adresse zu einem ersten Datenbankträger (201), sowie Empfangen einer Serveradresse eines Betreibers (203, 204, 205), welche für die virtuelle Adresse relevant ist und von dem ersten Datenbankträger (201) in Antwort auf die Meldung rückgesendet wird, und
b) Melden der virtuellen Adresse zu der Serveradresse des Betreibers (203, 204, 205), um in Antwort auf die Meldung eine Lieferadresse rückzusenden, welche für die virtuelle Adresse auf einem zweiten Datenbankträger (203b, 204b, 205b) relevant ist, dessen Aufzeichnungen für den Betreiber (203, 204, 205) zugänglich sind, Umwandeln der Sendung von einem physikalischen Format in ein elektronisches Format, und Senden der Sendung im elektronischen Format zusammen mit der virtuellen Adresse zu der Serveradresse des Betreibers (203, 204, 205) zur Lieferung der Sendung zum Empfänger im physikalischen Format, in dem Benachrichtigungsnetzwerk (203a, 204a, 205a) des Betreibers (203, 204, 205).

22. Vorrichtung nach Anspruch 21, worin die Vorrichtung dazu ausgelegt ist, vor dem Melden zum ersten Datenbankträger, die ENUM Telefonnummer in einen ENUM Identifizierer umzuwandeln, worin die ENUM Telefonnummer in Digits, Alphabeten, Symbolen, einem Strichcode, einem 2D-Strichcode, einem auf einem RFID-Tag getragenen Informationsstück oder als Kombination von beliebigen dieser ausgedrückt ist.

23. Vorrichtung nach Anspruch 21 oder 22, worin die Vorrichtung ein elektronisches Absenderdatenterminal ist, wie etwa ein mobiler Kommunikator, oder ein Betreibernetzwerkelement, eine vom Betreiber gemanagte Vorrichtung oder eine integrierte Schaltung.

24. Computersoftwareprodukt (700) zum Ermöglichen des Lieferns einer Sendung in einem Benachrichtigungsnetzwerk (203a, 204a, 205a) eines Postbetreibers (203, 204, 205), worin das Computersoftwareprodukt (700) Softwareelemente aufweist, welche ausgelegt sind zum:
a) Verwenden einer empfängerspezifizierenden virtuellen Adresse als Empfängeradresse auf der Sendung,
b) Melden (702) der virtuellen Adresse zu einem ersten Datenbankträger (201), um in Antwort auf die Meldung eine Serveradresse des Betreibers (203, 204, 205), welche für die virtuelle Adresse auf dem ersten Datenbankträger (201) relevant ist, rückzusenden,
c) Melden (705) in der virtuellen Adresse an die Serveradresse des Betreibers (203, 204, 205), um in Antwort auf die Meldung eine Lieferadresse, die für die virtuelle Adresse auf einem zweiten Datenbankträger (203b, 204b, 205b) relevant ist, dessen Aufzeichnungen für den Betreiber (203, 204, 205) zugänglich sind, rückzusenden, Umwandeln der Sendung von einem physikalischen Format in ein elektronisches Format, und Senden (706) der Sendung in dem elektronischen Format zusammen mit der virtuellen Adresse zu der Serveradresse des Betreibers (203, 204, 205), um die Sendung an den Empfänger zu liefern, in dem Benachrichtigungsnetzwerk (203a, 204a, 205a) des Betreibers (203, 204, 205), und
d) Umwandeln der Sendung in ein physikalisches Format und Verwenden der Lieferadresse zum Ermöglichen einer Lieferung der Sendung im physikalischen Format, in dem Benachrichtigungsnetzwerk (203a, 204a, 205a) des Betreibers (203, 204, 205),
wenn das Computersoftwareprodukt auf einer Vorrichtung läuft, wie sie in einem der Ansprüche 21 bis 23 angegeben ist.

25. Computersoftwareprodukt nach Anspruch 24, worin das Computersoftwareprodukt dazu ausgelegt ist, vor dem Melden zu dem ersten Datenbankträger die ENUM Telefonnummer in einen ENUM Identifizierer umzuwandeln, worin die ENUM Telefonnummer in Digits, Alphabeten, Symbolen, einem Strichcode, einem 2D-Strichcode, einem auf einem RFID-Tag tragenden Informationsstück oder als Kombination von beliebigen von diesen ausgedrückt ist, wenn das Computersoftwareprodukt in einer Vorrichtung läuft, wie sie in einem der Ansprüche 21 bis 23 angegeben ist.

## Revendications

1. Système (200, 250) permettant une distribution d'un envoi dans un réseau de messagerie (203a, 204a, 205a) d'un opérateur de la poste (203, 204, 205), dans lequel l'adresse du destinataire utilisée dans l'envoi comprend une adresse virtuelle spécifiant un destinataire et le système (200, 250) est adapté pour :
a) signaler ladite adresse virtuelle à un premier support de base de données (201) pour retourner, en réponse audit signalement, une adresse de serveur de l'opérateur (203, 204, 205) pertinente par rapport à ladite adresse virtuelle sur le premier support de base de données (201),
b) signaler ladite adresse virtuelle à ladite adresse de serveur de l'opérateur (203, 204, 205) pour retourner, en réponse audit signalement, une adresse de distribution pertinente par rapport à ladite adresse virtuelle sur un second support de base de données (203b, 204b, 205b), dont les enregistrements sont accessibles audit opérateur (203, 204, 205), convertir l'envoi d'un format physique en un format électronique et expédier ledit envoi au format électronique ainsi que ladite adresse virtuelle à ladite adresse de serveur de l'opérateur (203, 204, 205) pour une distribution de l'envoi au destinataire dans le réseau de messagerie (203a, 204a, 205a) de l'opérateur (203, 204, 205), et
c) convertir ledit envoi en format physique et utiliser ladite adresse de distribution pour permettre une distribution de l'envoi au format physique dans ledit réseau de messagerie (203a, 204a, 205a) de l'opérateur (203, 204, 205).

2. Système selon la revendication précédente, dans lequel l'adresse virtuelle spécifiant un destinataire, par exemple un numéro de téléphone ENUM du destinataire, est exprimée en chiffres, alphabets, symboles, code-barres, code-barres en 2D, élément d'informations que comporte une étiquette RFID, ou sous forme de combinaison de ceux-ci.

3. Système selon l'une quelconque des revendications précédentes, dans lequel le système est adapté pour convertir un numéro de téléphone ENUM en identifiant ENUM avant le signalement au premier support de base de données.

4. Système selon l'une quelconque des revendications précédentes, dans lequel
- le premier support de base de données comprend une liste de préférences d'au moins deux adresses différentes ou adresses de serveur de l'opérateur, le système étant adapté pour choisir l'adresse appliquée ou l'adresse de serveur de l'opérateur selon des préférences définies par un destinataire et/ou un expéditeur de l'envoi, et/ou
- le second support de base de données comprend une liste de préférences d'au moins deux adresses de distribution différentes, le système étant adapté pour choisir l'adresse de distribution appliquée selon des préférences définies par un destinataire et/ou un expéditeur de l'envoi.

5. Système selon l'une quelconque des revendications précédentes, dans lequel l'envoi d'origine est une livraison physique convertie en format électronique, le système étant adapté pour convertir ledit envoi en un envoi électronique avant une distribution de l'envoi.

6. Système selon l'une quelconque des revendications précédentes, dans lequel l'envoi à distribuer est en format électronique, le système étant adapté pour convertir l'envoi en format physique avant une distribution définitive de l'envoi à un destinataire dans le réseau de messagerie de l'opérateur de la poste.

7. Système selon la revendication 6, dans lequel le système est adapté pour produire sur ladite livraison physique une adresse de distribution pertinente par rapport à l'adresse virtuelle.

8. Système selon l'une quelconque des revendications précédentes, dans lequel l'opérateur est un opérateur de la poste, un opérateur de communication mobile ou un opérateur Internet.

9. Système selon l'une quelconque des revendications précédentes, dans lequel l'envoi comprend des informations de contact virtuelles pour un expéditeur, telles qu'un numéro de téléphone ENUM, et dans lequel le système est adapté pour fournir à l'expéditeur des informations concernant un état de la distribution de l'envoi en utilisant lesdites informations de contact.

10. Système selon l'une quelconque des revendications précédentes, dans lequel l'adresse virtuelle spécifiant un destinataire est par exemple un numéro de téléphone ENUM d'un destinataire, et dans lequel le système est adapté pour fournir au destinataire des informations concernant un état de la distribution de l'envoi en utilisant ladite adresse virtuelle spécifiant un destinataire, par exemple le numéro de téléphone ENUM.

11. Procédé (150, 170) permettant la distribution d'un envoi dans un réseau de messagerie (203a, 204a, 205a) d'un opérateur de la poste (203, 204, 205), dans lequel le procédé (150, 170) comprend
a) l'utilisation (152) d'une adresse virtuelle spécifiant un destinataire comme l'adresse du destinataire sur l'envoi,
b) le signalement (154) de ladite adresse virtuelle à un premier support de base de données (201) pour retourner, en réponse audit signalement, une adresse de serveur de l'opérateur (203, 204, 205) pertinente par rapport à ladite adresse virtuelle sur le premier support de base de données (201),
c) le signalement (156) de ladite adresse virtuelle à ladite adresse de serveur de l'opérateur (203, 204, 205) pour retourner, en réponse audit signalement, une adresse de distribution pertinente par rapport à ladite adresse virtuelle sur un second support de base de données (203b, 204b, 205b), dont les enregistrements sont accessibles audit opérateur (203, 204, 205), la conversion (172) de l'envoi d'un format physique en un format électronique et l'expédition (174) dudit envoi au format électronique ainsi que ladite adresse virtuelle à ladite adresse de serveur de l'opérateur (203, 204, 205) pour une distribution de l'envoi au destinataire dans le réseau de messagerie (203a, 204a, 205a) de l'opérateur (203, 204, 205), et
d) la conversion (178) dudit envoi en format physique et l'utilisation de ladite adresse de distribution pour permettre une distribution de l'envoi au format physique dans ledit réseau de messagerie (203a, 204a, 205a) de l'opérateur (203, 204, 205).

12. Procédé selon la revendication 11, dans lequel l'adresse virtuelle spécifiant un destinataire, par exemple un numéro de téléphone ENUM du destinateur, est exprimée en chiffres, alphabets, symboles, code-barres, code-barres en 2D, élément d'informations que comporte une étiquette RFID, ou sous forme de combinaison de ceux-ci.

13. Procédé selon la revendication 11, dans lequel le numéro de téléphone ENUM est converti en identifiant ENUM avant le signalement au premier support de base de données.

14. Procédé selon l'une quelconque des revendications 11 à 13, dans lequel
- le premier support de base de données comprend une liste de préférences d'au moins deux adresses de serveur de l'opérateur différentes, l'adresse de serveur de l'opérateur appliquée étant choisie selon des préférences définies par un destinataire et/ou un expéditeur de l'envoi, et/ou
- le second support de base de données comprend une liste de préférences d'au moins deux adresses de distribution différentes, l'adresse de distribution appliquée étant choisie selon des préférences définies par un destinataire et/ou un expéditeur de l'envoi.

15. Procédé selon l'une quelconque des revendications 11 à 14, dans lequel l'envoi d'origine est une livraison physique convertible en format électronique, ledit envoi étant converti en un envoi électronique avant une distribution de l'envoi.

16. Procédé selon l'une quelconque des revendications 11 à 15, dans lequel l'envoi à distribuer est en format électronique, ledit envoi étant converti en format physique avant une distribution définitive de l'envoi à un destinataire dans le réseau de messagerie de l'opérateur de la poste.

17. Procédé selon la revendication 16, dans lequel ladite livraison physique est produite avec une adresse de distribution pertinente par rapport à l'adresse virtuelle.

18. Procédé selon l'une quelconque des revendications 11 à 17, dans lequel l'opérateur est un opérateur de la poste, un opérateur de communication mobile ou un opérateur Internet.

19. Procédé selon l'une quelconque des revendications 11 à 18, dans lequel l'envoi comprend des informations de contact virtuelles pour un expéditeur, telles qu'un numéro de téléphone ENUM, et dans lequel l'expéditeur se voit fournir des informations concernant un état de la distribution de l'envoi en utilisant lesdites informations de contact.

20. Procédé selon l'une quelconque des revendications 11 à 19, dans lequel l'adresse virtuelle spécifiant un destinataire est par exemple un numéro de téléphone ENUM d'un destinataire, et dans lequel le destinataire se voit fournir des informations concernant un état de la distribution de l'envoi en utilisant ladite adresse virtuelle spécifiant un destinataire, par exemple le numéro de téléphone ENUM.

21. Dispositif destiné à être utilisé dans un système selon l'une quelconque des revendications 1 à 8, dans lequel ledit dispositif est adapté pour
a) signaler, dans le processus d'expédition d'un envoi, ladite adresse virtuelle à un premier support de base de données (201), ainsi que recevoir une adresse de serveur de l'opérateur (203, 204, 205), qui est pertinente par rapport à ladite adresse virtuelle et retournée par ledit premier support de base de données (201) en réponse au signalement, et
b) signaler ladite adresse virtuelle à ladite adresse de serveur de l'opérateur (203, 204, 205) pour retourner, en réponse audit signalement, une adresse de distribution pertinente par rapport à ladite adresse virtuelle sur un second support de base de données (203b, 204b, 205b), dont les enregistrements sont accessibles à l'opérateur (203, 204, 205), convertir l'envoi d'un format physique en un format électronique et expédier ledit envoi au format électronique ainsi que ladite adresse virtuelle à ladite adresse de serveur de l'opérateur (203, 204, 205) pour une distribution de l'envoi au destinataire en format physique dans le réseau de messagerie (203a, 204a, 205a) de l'opérateur (203, 204, 205).

22. Dispositif selon la revendication 21, dans lequel le dispositif est adapté pour convertir le numéro de téléphone ENUM en identifiant ENUM avant le signalement au premier support de base de données, dans lequel ledit numéro de téléphone ENUM est exprimé en chiffres, alphabets, symboles, code-barres, code-barres en 2D, élément d'informations que comporte une étiquette RFID, ou sous forme de combinaison de ceux-ci.

23. Dispositif selon la revendication 21 ou 22, dans lequel le dispositif est un terminal de données électronique tel qu'un ordinaphone, ou un élément de réseau de l'opérateur, un dispositif géré par un opérateur ou un circuit intégré.

24. Produit logiciel informatique (700) permettant la distribution d'un envoi dans un réseau de messagerie (203a, 204a, 205a) d'un opérateur de la poste (203, 204, 205), dans lequel le produit logiciel informatique (700) comprend des éléments logiciels, qui sont adaptés pour
a) utiliser une adresse virtuelle spécifiant un destinataire comme l'adresse de destinataire sur l'envoi,
b) signaler (702) ladite adresse virtuelle à un premier support de base de données (201) pour retourner, en réponse audit signalement, une adresse de serveur de l'opérateur (203, 204, 205) pertinente par rapport à ladite adresse virtuelle sur le premier support de base de données (201),
c) signaler (705) ladite adresse virtuelle à ladite adresse de serveur de l'opérateur (203, 204, 205) pour retourner, en réponse audit signalement, une adresse de distribution pertinente par rapport à ladite adresse virtuelle sur un second support de base de données (203b, 204b, 205b), dont les enregistrements sont accessibles audit opérateur (203, 204, 205), convertir l'envoi d'un format physique en un format électronique et expédier (706) ledit envoi au format électronique ainsi que ladite adresse virtuelle à ladite adresse de serveur de l'opérateur (203, 204, 205) pour une distribution de l'envoi au destinataire dans le réseau de messagerie (203a, 204a, 205a) de l'opérateur (203, 204, 205), et
d) convertir ledit envoi en format physique et utiliser ladite adresse de distribution pour permettre une distribution de l'envoi au format physique dans le réseau de messagerie (203a, 204a, 205a) de l'opérateur (203, 204, 205),
ledit produit logiciel informatique étant exécuté dans un dispositif tel que précisé dans l'une quelconque des revendications 21 à 23.

25. Produit logiciel informatique selon la revendication 24, dans lequel le produit logiciel informatique est adapté pour convertir le numéro de téléphone ENUM en identifiant ENUM avant le signalement au premier support de base de données, dans lequel ledit numéro de téléphone ENUM est exprimé en chiffres, alphabets, symboles, code-barres, code-barres en 2D, élément d'informations que comporte une étiquette RFID, ou sous forme de combinaison de ceux-ci, ledit produit logiciel informatique étant exécuté dans un dispositif tel que précisé dans l'une quelconque des revendications 21 à 23.
